**Europäisches Patentamt**

**European Patent Office**

**Office européen des brevets**

(19)

(11) Veröffentlichungsnummer : **0 150 475 B1**

(12) # EUROPÄISCHE PATENTSCHRIFT

(45) Veröffentlichungstag der Patentschrift :
05.04.89

(51) Int. Cl.⁴ : **B 62 M 11/04**

(21) Anmeldenummer : **84116124.3**

(22) Anmeldetag : **21.12.84**

(54) Einrichtung zur Verbindung eines Schaltzugs mit einer Mehrgangschaltung für Fahrräder oder dergleichen.

(30) Priorität : **20.01.84 DE 8401594 U**

(43) Veröffentlichungstag der Anmeldung :
**07.08.85 Patentblatt 85/32**

(45) Bekanntmachung des Hinweises auf die Patenterteilung : **05.04.89 Patentblatt 89/14**

(84) Benannte Vertragsstaaten :
**BE DE FR GB IT NL**

(56) Entgegenhaltungen :
**DE--A-- 2 723 869
DE--U-- 8 225 387
FR--A-- 2 544 894**

(73) Patentinhaber : **Freko Verbindungselemente + Technik GmbH
Westiger Strasse 62
D-5990 Altena (DE)**

(72) Erfinder : **Frenschkowski, Gerhard
Im Lissingsiepen 31
D-5990 Altena (DE)**

(74) Vertreter : **Dörner, Lothar, Dipl.-Ing.
Stresemannstrasse 15
D-5800 Hagen (DE)**

EP 0 150 475 B1

## Beschreibung

Die Erfindung betrifft eine Einrichtung zur lösbaren Verbindung eines Schaltzugs mit einem aus einer Mehrgangschaltung für Fahrräder oder dergleichen herausgeführten Anschlußteil, mit einem Steckelement, an dem der Schaltzug befestigt ist und das ein lösbares Rastelement aufweist, das in Rasten auf der Oberfläche eines Einsteckstifts des Anschlußteils eingreift.

Mit Einrichtungen der vorgenannten Art wird die Wirkverbindung zwischen einem im Griffbereich des Fahrradbenutzers angebrachten Handschalter und einem in der Regel am Hinterrad des Fahrrads angeordneten Antriebssystem hergestellt.

Es ist bekannt (DE-U-82 25 376), einen Schaltzug mit dem Anschlußteil der Mehrgangschaltung über eine schraubbare Hülse zu verbinden. Die Hülse weist ein Innengewinde auf, welches einen Gewindeanschlußstift am Ende einer mit der Mehrgangschaltung verbundenen Schaltkette aufnimmt, wodurch eine justierbare Verbindung möglich wird. Die bekannte Einrichtung hat den Nachteil, daß bei einer Demontage des Antriebssystems eine völlige Trennung der Schaltzugverbindung nur durch Abschrauben der Gewindehülse vom Gewindestift am Ende der Schaltkette erreicht werden kann. Bei einem erneuten Zusammenfügen der Schaltzugverbindung ist unbedingt eine Justierung durch Schraubeneinstellung erforderlich, um die exakte Wirkungsweise der Mehrgangschaltung zu erreichen. Dabei sind ein gewisser Zeitaufwand sowie technisches Gefühl erforderlich, welches nicht bei allen Fahrradbenutzern vorausgesetzt werden kann.

Es ist auch bekannt (DE-U-83 06 309) bei einem Schaltzug anstelle einer schraubbaren Verbindung eine Steckverbindung zu verwenden. Die bekannte Steckverbindung umfaßt ein hülsenförmiges Gehäuse. An dem Gehäuse ist einerseits der Schaltzug befestigt, andererseits ist eine rohrförmige Aufnahme für ein Einsteckteil in der Form eines Rastenstifts vorgesehen. In der Aufnahme befindet sich ein Rastelement für den Rastenstift. Das Rastelement besteht aus einer verschwenkbar angeordneten in die Aufnahme hineingreifenden Kralle mit schneidenartigem Eingriffsende. Die Kralle steht unter Wirkung einer Schenkelfeder und weist eine Lösungshandhabe auf. Bei der bekannten Vorrichtung ist ein Rastenstift vorgesehen, der auf seiner Mantelfläche quer zur Längsachse ringförmig umlaufende in Längsrichtung aufeinanderfolgende Rasten aufweist. Trotzdem ist die Haltewirkung begrenzt, da die Kralle nur an einer Stelle auf den Umfang des Rastenstifts angreift. Eine Kombination mit dem Gewindeanschlußstift der vorher beschriebenen, bei Schaltzügen der hier betrachteten Art noch überwiegend eingesetzten Einrichtung ist nicht möglich ; das hülsenförmige Gehäuse besteht aus einer Mehrzahl von Teilen und ist unnötig aufwendig konstruiert.

Hier will die Erfindung Abhilfe schaffen. Ihr liegt die Aufgabe zugrunde, eine Einrichtung der eingangs genannten Art so auszugestalten, daß bei Verwendung der Mindestzahl an Teilen an diametral gegenüberliegenden Stellen des Stifts der Rastangriff erfolgt, sodaß auch nicht besonders ausgeprägte Rasten an dem Rastenstift gehalten werden. Gemäß der Erfindung wird diese Aufgabe dadurch gelöst, daß als Steckelement eine Biegungsfeder aus Bandstahl mit zwei parallelen Schenkeln, einem Verbindungsstück zwischen den Schenkelenden an einer Seite und in Richtung auf den jeweils anderen Schenkel abgewinkelte Endstücke auf der anderen Seite verwendet ist, von denen das Verbindungsstück mit dem Schaltzug verbunden und jedes der abgewinkelten Endstücke mit einer Öffnung versehen ist, die bei gespannter Biegungsfeder für die Aufnahme des Einsteckstifts in parallelen Ebenen angeordnet sind und überlappen, bei teilweise entspannter Biegungsfeder mit diametral gegenüberliegenden Randbereichen hinter die Rasten des Einsteckstifts greifen.

Bei der Erfindung besteht das Verbindungselement aus einem einzigen Teil, nämlich aus der Biegungsfeder. Eine geringere Zahl von Einzelteilen ist nicht möglich. Trotzdem erfüllt die Biegungsfeder alle Bedingungen, die an die sichere Verbindung zwischen Schaltzug und Anschlußteil zu stellen sind. Hinsichtlich der Befestigung des Schaltzugs gibt es — wie auch bei den bekannten Verbindungselementen — keine Probleme. Durch die zangenartige Wirkung der Endstücke ist die Verbindung zu dem Anschlußteil verbessert. Es kann sowohl ein Gewindeanschlußstift eingesteckt oder auch eingeschraubt werden als auch ein Rastenstift eingesteckt werden. Die Endstücke liegen mit ihren schneidenartig ausgebildeten freien Kanten in benachbarten Gewindegängen oder Rastenstufen an ; sie wirken wie eine Gewindemutter mit zwei Gewindegängen, von denen jeweils auf diametral gegenüberliegenden Seiten etwa eine Gewindehälfte greift.

Ausgestaltungen und Weiterbildungen der Erfindung sind in den Unteransprüchen angegeben. Ein Ausführungsbeispiel der Erfindung ist in der Zeichnung dargestellt und wird im folgenden näher beschrieben. Es zeigen :

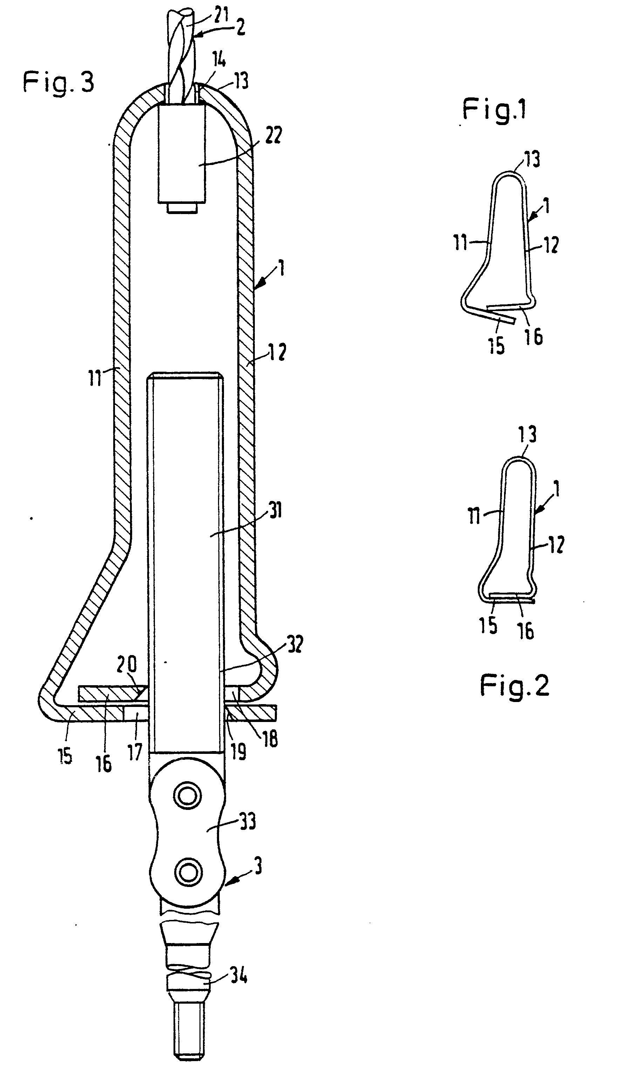

Fig. 1   eine Seitenansicht einer Biegungsfeder in völlig entspanntem Zustand ;

Fig. 2   die in Fig. 1 dargestellte Biegungsfeder in völlig gespanntem Zustand ;

Fig. 3   in vergrößertem Maßstab die in Fig. 1 und 2 dargestellte Biegungsfeder mit eingestecktem Stift und befestigtem Schaltzug.

An einer für die lösbare Verbindung eines Schaltzugs 2 mit einem aus einer Mehrgangschaltung für Fahrräder oder dergleichen herausgeführten Anschlußteil 3 ist ein Steckelement in der Form einer Biegungsfeder 1 vorgesehen.

Die Biegungsfeder besteht aus Bandstahl. Sie weist zwei parallele Schenkel 11, 12 auf. An einem Ende sind die Schenkel 11, 12 durch ein Verbindungsstück 13 miteinander verbunden. Das Verbindungsstück 13 weist eine Öffnung 14 auf, mit deren Hilfe der Schaltzug 2 befestigt ist. Auf der entgegengesetzten Seite ist an jeden der Schenkel 11, 12 ein in Richtung auf den anderen Schenkel 12, 11 abgewinkeltes Endstück 15, 16 angeformt. Jedes der Endstücke 15, 16 ist mit einer·Öffnung 17, 18 versehen. Bei gespannter Biegungsfeder 1 sind die Endstücke 15, 16 parallel zueinander. Wenn sich die Öffnungen 17, 18 überlappen, kann ein Einsteckstift 31 des Anschlußteils 3 eingeführt werden. Bei teilweise entspannter Biegungsfeder 1 greifen die Öffnungen 17, 18 an diametral gegenüberliegenden Randbereichen 19, 20, in denen die Öffnungen 17, 18 schneidenförmig ausgebildet sind, hinter Rasten 32, die an dem Einsteckstift 31 vorgesehen sind. Bei den Rasten 32 kann es sich sowohl um ein Gewinde als auch um besondere Rasten handeln.

Die Schenkel 11, 12 sind vor ihrem Übergang in die Endstücke 15, 16 nach der von dem anderen Schenkel 12, 11 abgewandten Seite gekröpft. Dabei weist der Schenkel 11 eine weiter nach außen ragende Kröpfung auf als der Schenkel 12. Dies ermöglicht es, das mit dem Schenkel 12 verbundene Endstück 16 mit seiner freien Kante bis in die Kröpfung hinein zu bewegen. Die Länge des inneren Endstücks 16 und der Abstand jeder der Öffnungen 17, 18 von der freien Kante des zugehörigen Endstücks 15 oder 16 sind so gewählt, daß bei gespannter Biegungsfeder 1 mit Anschlag der freien Kante des inneren Endstücks 16 an den anderen Schenkel 11, genauer an die Kröpfung dieses Schenkels, die Öffnungen 17, 18 deckungsgleich sind. Bei deckungsgleichen Öffnungen 17, 18 wird der Einsteckstift 31 eingeführt. Die kerbenartig ausgebildeten Randbereiche 19, 20 der Öffnungen 17, 18 greifen dann nach Art einer Zange hinter die Rasten 32 des Einsteckstifts 31.

Die aus Bandstahl in der Qualität Federstahl hergestellte Biegungsfeder 1 weist eine Stärke auf, die gleich dem Abstand zweier Rasten 32 des Einsteckstifts 31 ist. Dies führt dazu, daß die Randbereiche 19, 20 benachbarte Rasten 32 hintergreifen. Dies ermöglicht es auch, mit der Biegungsfeder 1 Einsteckstifte zu halten, die anstelle der Rasten ein Gewinde aufweisen. Das Gewinde kann nach dem Einführen in die Öffnungen 17, 18 geschraubt werden, da die Biegungsfeder 1 im Bereich ihrer Öffnungen 17, 18 nach Art einer Gewindemutter wirkt.

An den Einsteckstift 31 ist an einem Ende eine Zugkette 33 befestigt, an deren anderen Ende eine Gewindestange 34 befestigt ist, die Teil der Mehrgangschaltung ist.

Der durch die Öffnung 14 im Verbindungsstück 13 geführte Schaltzug 2 besteht in üblicher Weise aus einem Seilzug 21, der an seinem inneren Ende einen Seilnippel 22 aufweist, mit dem der Schaltzug 2 an der Biegungsfeder 1 abgestützt ist.

**Patentansprüche**

1. Einrichtung zur lösbaren Verbindung eines Schaltzugs mit einem aus einer Mehrgangschaltung für Fahrräder oder dergleichen herausgeführten Anschlußteil, mit einem Steckelement, an dem der Schaltzug befestigt ist und das ein lösbares Rastelement aufweist, das in Rasten auf der Oberfläche eines Einsteckstifts des Anschlußteils eingreift, dadurch gekennzeichnet, daß als Steckelement eine Biegungsfeder (1) aus Bandstahl mit zwei parallelen Schenkeln (11, 12), einem Verbindungsstück (13) zwischen den Schenkelenden an einer Seite und in Richtung auf den jeweils anderen Schenkel (12, 11) abgewinkelte Endstücke (15, 16) auf der anderen Seite verwendet ist, von denen das Verbindungsstück (13) mit dem Schaltzug (2) verbunden und jedes der abgewinkelten Endstücke (15, 16) mit einer Öffnung (17, 18) versehen ist, die bei gespannter Biegungsfeder (1) für die Aufnahme des Einsteckstifts (31) in parallelen Ebenen angeordnet sind und überlappen, bei teilweise entspannter Biegungsfeder (1) mit diametral gegenüberliegenden Randbereichen (19, 20) hinter die Rasten (32) des Einsteckstifts (31) greifen.

2. Einrichtung nach Anspruch 1, dadurch gekennzeichnet, daß die Schenkel (11, 12) vor ihrem Übergang in die Endstücke (15, 16) nach der von dem anderen Schenkel (12, 11) abgewandten Seite gekröpft sind.

3. Einrichtung nach Anspruch 1 oder 2, dadurch gekennzeichnet, daß die Stärke der Biegungsfeder (1) gleich dem Abstand zweier Rasten (32) des Einsteckstifts (31) ist.

4. Einrichtung nach einem der Ansprüche 1 bis 3, dadurch gekennzeichnet, daß die Länge des inneren Endstücks (15) und der Abstand jeder der Öffnungen (17, 18) von der freien Kante ihres Endstücks (15, 16) so gewählt sind, daß bei gespannter Biegungsfeder (1) mit Anschlag der freien Kante des inneren Endstücks (15) an den anderen Schenkel (12) die Öffnungen (17, 18) deckungsgleich sind.

**Claims**

1. Device for connecting a gearshift cable in a releasable manner to a mating part guided out of a multispeed gearshift for bicycles or similar, comprising a receiving component to which the gearshift cable is secured and which comprises a releasable locking component which engages in catches on the surface of a push-in pin of the mating part, characterised in that a spiral spring (1) of steel ribbon with two parallel legs (11, 12), a connecting piece (13) between the leg ends at one side and end pieces (15, 16) bent in the direction of the respective other leg (12, 11) at the other side is used as the receiving component, the connecting piece (13) being connected to the gearshift cable (2) and each of the bent end pieces (15, 16) being provided with a hole (17, 18), which holes are arranged in parallel planes and overlap when the spiral spring (1) is tensioned to receive the push-in pin (31) and engage with diametrically opposite edge areas (19, 20) behind the catches (32) of the push-in pin (31) when the spiral spring (1) ist partially relaxed.

2. Device according to claim 1, characterised in that the legs (11, 12) are elbowed towards the side distant from the other leg (12, 11) before passing into the end pieces (15, 16).

3. Device according to claim 1 or 2, characterised in that the thickness of the spiral spring is equal to the distance between two catches (32) of the push-in pin (31).

4. Device according to one of claims 1 or 3, characterised in that the length of the inner end piece (15) ande the distance of each of the holes (17, 18) from the free edge of its end piece (15, 16) are such that the holes (17, 18) are congruent when the spiral spring (1) ist tensioned and the free edge of the inner end piece (1b) contacts the other leg (12).

**Revendications**

1. Dispositif pour l'accouplement amovible d'un câble de commande avec un élément d'accouplement sorti d'un dérailleur à vitesses multiples pour bicyclettes ou analogues, comprenant un élément embrochable auquel est fixé le câble de commande et qui présente un élément d'arrêt amovible qui s'engage dans des crans d'arrêt à la surface d'un axe enfichable de l'élément d'accouplement, caractérisé en ce qu'il utilise en tant qu'élément embrochable un ressort de flexion (1) en acier feuillard avec deux branches parallèles (11, 12), un raccord (13) entre les extrémités des branches, sur l'un des côtés, et des sections terminales (15, 16) respectivement coudées en direction de l'autre branche (12, 11), sur l'autre côté, le raccord (13) étant relié au câble de commande (2) et chacune des sections terminales coudées (15, 16) comportant une ouverture (17, 18) qui, à l'état tendu du ressort de flexion (1), sont disposées, pour la réception de la broche à emboîter (31), dans des plans parallèles et se recouvrent, alors qu'elles s'engagent avec des zones diamétralement opposées (19, 20) derrière les crans d'arrêt (32) de la tige enfichable (31) lorsque le ressort de flexion (1) est partiellement détendu.

2. Dispositif selon la revendication 1, caractérisé en ce que les branches (11, 12) sont coudées, avant de se transformer en sections terminales (15, 16), vers le côté opposé à l'autre branche (12, 11).

3. Dispositif selon l'une des revendications 1 ou 2, caractérisé en ce que l'épaisseur du ressort de flexion (1) est égale à la distance entre deux crans d'arrêt (32) de la tige enfichable (31).

4. Dispositif selon l'une quelconque des revendications 1 à 3, caractérisé en ce que la longueur de la section terminale intérieure (15) et la distance entre chacune des ouvertures (17, 18) et l'arête libre de la section terminale associée (15, 16) sont choisies de telle façon que, lorsque le ressort de flexion (1) est tendu et que l'arête libre de la section terminale intérieure (16) est en butée contre l'autre branche (11), les ouvertures (17, 18) coïncident.

EP 0 150 475 B1

Fig. 3

Fig.1

Fig.2